# EUROPÄISCHE PATENTANMELDUNG

(11) **EP 1 040 751 A2**
(43) Veröffentlichungstag der Anmeldung: **04.10.2000**
(21) Anmeldenummer: 00100153.6
(22) Anmeldetag: 10.01.2000
(51) Int. Cl.: A01D 75/30

(54) **Selbstfahrende Mäheinheit**

(30) Priorität: 31.03.1999 DE 19914620; 06.11.1999 DE 19953380
(71) Anmelder: NIEMEYER Landmaschinen GmbH, D-48477 Hörstel-Riesenbeck (DE)
(72) Erfinder: Altepost, Helmut, 48477 Hörstel (DE); Tebbenhoff, Hermann, 48496 Hopsten (DE); Ungruh, Josef, 48429 Rheine (DE)

(57) **Zusammenfassung**

Selbstfahrende Mäheinheit bestehend aus einem Trägerfahrzeug (1) mit einem Frontmähwerk (2) und beidseitig an dem Trägerfahrzeug (1) angelenkten Seitenmähwerken (3,3'), zum Mähen von landwirtschaftlichem Halmgut mit oder ohne Aufbereiter (11), wobei die Seitenmähwerke (3,3') zwischen den Vorder- (7) und Hinterrädern (8) seitlich auskragend an einem Auslegerarm (4,4') angeordnet und geführt sind, und die Auslegerarme (4,4') jeweils zur höhenbeweglichen Aufhängung der Seitenmähwerke (3,3') an den Tragholmen (22,22') des Fahrgestells (9) des Trägerfahrzeugs (1) um eine annähernd in Fahrt- und Arbeitsrichtung (F) des Trägerfahrzeugs (1) ausgerichtete Achse einer Scharniergelenkverbindung (25,25') schwenkbar gelagert sind, und jedes Mähaggregat (10,10') der Seitenmähwerke (3,3') gelenkig mit dem äußeren Ende des Auslegerarms (4,4') verbunden ist, und jedes Seitenmähwerk (3,3') jeweils mit seinem Auslegerarmen (4,4') mittels einer Kolben-Zylinder-Anordnung an dem Fahrgestell (9) des Trägerfahrzeugs (1) angelenkt und so mit diesem verbunden aus einer etwa horizontalen Arbeitsstellung in eine nahezu vertikale Transportstellung überführbar ist, wobei jedes Seitenmähwerk (3,3') einen ersten Stellantrieb als Druckmittelzylinder (35,35') zum Verschwenken eines Mähaggregates (10,10') um die Schwenkachse (27,27') zur Überführung des Seitenmähwerks (3,3') von seiner Arbeits- in seine Transportstellung und umgekehrt aufweist, und wobei jedes Seitenmähwerk (3,3') einen zweiten Stellantrieb als Druckmittelzylinder (36,36') zur Überbrückung der Scharniergelenkverbindung (25,25') aufweist derart, daß die Schwenkbeweglichkeit der Auslegerarme (4,4') um die Schwenkachse (27,27') wahlweise freigegeben oder unterbunden werden kann, und wobei jedes Seitenmähwerk (3,3') jeweils am äußeren Ende seiner Längserstreckung ein Stützrad (15) aufweist.

## Beschreibung

Die Erfindung betrifft die Anlenkung von Seitenmähwerken an ein Trägerfahrzeug als selbstfahrende Mäheinheit nach dem Oberbegriff des Anspruchs 1, wobei die Mähaggregate vorzugsweise als Kreiselmäher ausgebildet sind, welche für das Mähen von Halmgut, insbesondere von Grünfutter für landwirtschaftliche Zwecke geeignet sind.

Derartige Anlenkungen sind insbesondere von Mähwerken in einer Vielzahl von Ausführungen bekannt.

So ist beispielsweise in der EP 0 808 556 A1 die Aufhängung und Antriebsanordnung für ein- oder beidseitig an einem Trägerfahrzeug angebrachte Mähaggregate dargestellt, welches ein Frontmähwerk und zwei seitlich zwischen den Achsen des Trägerfahrzeugs angeordnete Seitenmähwerke aufweist. Jedes der beiden Seitenmähwerke ist um eine annähernd in Fahrt- und Arbeitsrichtung des Trägerfahrzeug ausgerichteten Achse schwenkbar an einem Auslegerarm angeordnet. An den außenseitigen Enden der Auslegerarme befindet sich eine Gelenkanordnung, an dem die Arbeitsaggregate als Mähaggregate angelenkt sind. Die Anlenkung der Mähaggregate erfolgt etwa im Schwerpunkt des sich quer zur Fahrt- und Arbeitsrichtung erstreckenden Mähaggregates. Der Antriebsstrang zum Antrieb der Mähwerkzeuge ist Bestandteil der Gelenkverbindung, wobei der Antriebsstrang beispielsweise als ein Keilriemenantrieb in Verbindung mit Transmissionselementen, wie beispielsweise Wellen mit Kreuzgelenken und Kegelradgetrieben ausgebildet sein kann.

Aufgabe dieser Erfindung ist es, eine selbstfahrende Mäheinheit bestehend aus Trägerfahrzeug, Frontmähwerk und beidseitig des Trägerfahrzeugs angelenkten Seitenmähwerken zu schaffen, dessen Lenkeigenschaften im Betriebszustand des Mähens verbessert werden.

Gelöst wird diese Aufgabe mit den Merkmalen des kennzeichnenden Teils des Anspruchs 1. Die weitere Ausgestaltung der Erfindung ist der nachfolgenden Beschreibung, den Zeichnungen und den Ansprüchen 2 bis 20 zu entnehmen.

### Bezugszeichenliste

- 1 -: Trägerfahrzeug
- 2 -: Frontmähwerk
- 3,3' -: Seitenmähwerk
- 4,4' -: Auslegerarm
- 5 -: Vorderachse
- 6 -: Hinterachse
- 7 -: Vorderrad
- 8 -: Hinterrad
- 9 -: Fahrgestell
- 10,10',10'' -: Mähaggregat
- 11,11',11'' -: Aufbereiter
- 12,12' -: Hauptträger
- 13,13' -: Stützradträger
- 14 -: Schwenklager
- 15,15' -: Stützrad
- 16 -: Hochachse
- 17,17',17'' -: Zugbockausleger
- 18 -: Federelement
- 19,19',19'' -: Hubzylinder
- 20 -: Lenkerkopplung
- 21,21' -: Koppelglied
- 22,22' -: Tragholm
- 23 -: Front-Dreipunkthydraulik
- 24 -: Hubzylinder
- 25,25' -: Scharniergelenkverbindung
- 26,26' -: Scharniergelenkverbindung
- 27,27' -: Schwenkachse
- 28,28' -: Schwenkachse
- 29 -: Keilriemenscheibe
- 30 -: Verteilergetriebe
- 31 -: Gelenkwelle
- 32 -: Gelenkwelle
- 33 -: Verteilergetriebe
- 34,34' -: Gelenkwelle
- 35,35' -: Druckmittelzylinder
- 36,36' -: Druckmittelzylinder
- 37,37' -: Gelenkpunkt
- 38,38' -: Gelenkpunkt
- 39,39' -: Gelenkpunkt
- 40,40' -: Gelenkpunkt
- 41 -: Hauptmittelebene
- 42 -: Aufstandsebene
- 43 -: Horizontale
- 44,44',44'' -: Ventile
- 45,45' -: Wegeventile
- 46,46' -: Wegeventile
- 47 -: Wegeventil
- 48 -: Reihenflanschplatte
- 49 -: Regelpumpe
- 50,50' -: Drucksensor
- 51,51' -: Drucksensor
- 52,52' -: Wegaufnehmer
- 53,53' -: Wegaufnehmer
- 54,54' -: Servo-Wegeventil
- 55,55' -: Servo-Druckventil
- 56,56' -: Tragkonstruktion
- a -: Schaltstellung
- b -: Schaltstellung
- x₁ -: Hebelarm
- x₂ -: Hebelarm
- F -: Fahrtrichtung
- F₂₈, F'₂₈ -: Gewichtskraft
- -F₂₈, -F'₂₈ -: Bodenstützkraft
- F₃₉, F'₃₉ -: Zylinderstützkraft
- F₄₀, F'₄₀ -: Gewichtskraft
- M -: Motor
- P -: Pumpenleitung
- T -: Tankleitung
- α -: Neigungswinkel
- β -: Neigungswinkel
- γ -: Neigungswinkel

Es zeigt:
- **Fig. 1** -: Mäheinheit in der Seitenansicht in Fahrtrichtung (F)
- **Fig. 2** -: Selbstfahrende Mäheinheit in der Seitenansicht in Fahrtrichtung (F) mit vom Boden abgehobenen Mähaggregaten
- **Fig. 3** -: Mäheinheit mit einem Trägerfahrzeug (1) in vereinfachter Darstellung in einer Ansicht (X) von oben auf die Arbeitsebene gerichtet gemäß Fig.1
- **Fig. 4** -: Ansicht (Y) gemäß Fig.1 in vereinfachter, vergrößerter Darstellung
- **Fig. 5** -: Anlenkung der Druckmittelzylinder (35,36) gemäß Fig.4 in vergrößerter Darstellung
- **Fig. 5a** -: Vereinfachte Darstellung der Kräfte am Beispiel des Auslegerarms (4)
- **Fig. 5b** -: Vereinfachte grafische Darstellung der Kräfte am Beispiel des Auslegerarms (4')
- **Fig. 6** -: Ansicht (W) gemäß Fig.5
- **Fig. 7** -: Ansicht (Z) gemäß Fig.5
- **Fig. 8** -: Mäheinheit nach der Erfindung in der Darstellung analog zu Fig.3
- **Fig. 9** -: Darstellung einer Mäheinheit nach der Erfindung analog Fig.4
- **Fig. 10** -: Eine mögliche Arbeitsstellung der Mäheinheit analog zu Fig.9
- **Fig. 11** -: Ansicht (Y) gemäß Fig. 1 in vereinfachter jedoch vergrößerter Darstellung
- **Fig. 12** -: Ausführungsbeispiel einer hydraulischen Beschaltung der Druckmittelzylinder, ohne Lageregelung
- **Fig. 13** -: Ausführungsbeispiel einer hydraulischen Beschaltung der Druckmittelzylinder, mit Lageregelung

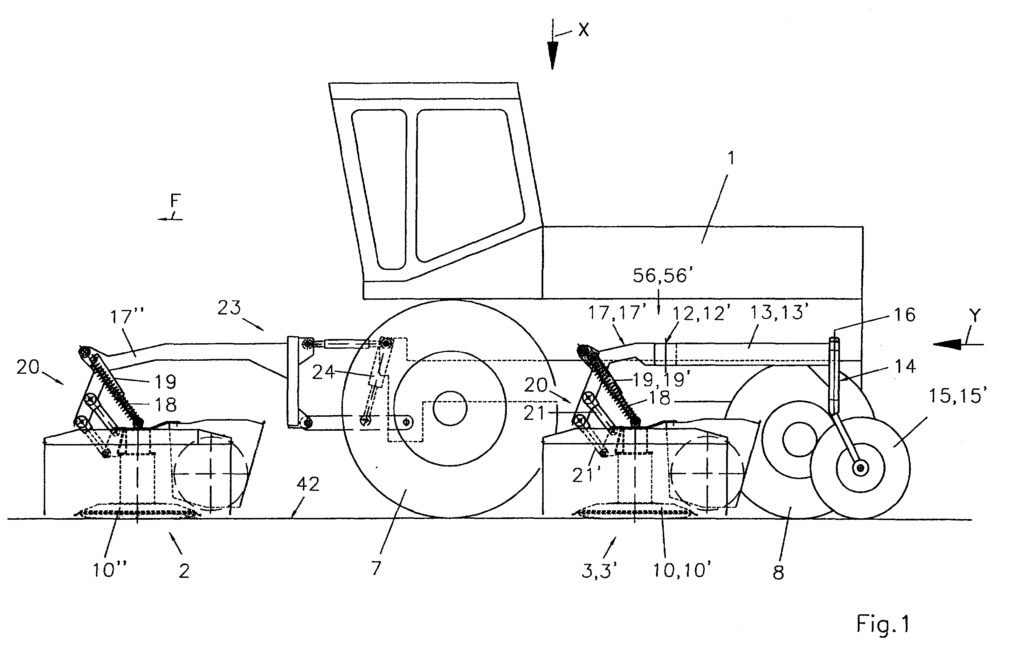

**Fig. 1** zeigt eine Mäheinheit nach der Erfindung in der Seitenansicht in Fahrtrichtung (F), dessen Räder sich auf einer planebenen Aufstandsebene (42) abstützen. Die dargestellte Mäheinheit besteht aus einem Trägerfahrzeug (1) mit einem an der Front-Dreipunkthydraulik (23) angekoppelten Frontmähwerk (2) und zwei seitlich beidseitig des Trägerfahrzeug (1) zwischen den Vorderrädern (7) und den Hinterrädern (8) des Trägerfahrzeugs (1) angeordneten Seitenmähwerken (3,3').

Die vereinfacht dargestellten Mähaggregate (10,10',10''), die der Seitenmähwerke (3,3') und das des Frontmähwerks (2), sind als Kreiselmäher mit rotierenden Mähwerkzeugen mit integrierten Aufbereitern (11,11',11'') dargestellt. Die Mähaggregate (10,10',10'') stehen antreibbar und mittels einer Lenkerkopplung (20) schleppbar mit dem Trägerfahrzeug (1) in Wirkverbindung.

Die Seitenmähwerke (3,3') weisen zusätzlich ein Stützrad (15,15') auf, welches am Ende eines Stützradträgers (13,13') in einem Schwenklager (14) um die Hochachse (16) verschwenkbar gelagert, als frei nachlaufendes Stützrad (15,15') ausgebildet ist. Der Stützradträger (13,13') ist mit einem Hauptträger (12,12'), welcher an das Trägerfahrzeug (1) seitlich angelenkt ist, verbunden.

Die Lenkerkopplung (20) besteht aus gelenkig angeschlagenen Koppelgliedern (21,21'), welche einerseits an den Mähaggregaten (10,10',10'') und andererseits an einem Ausleger, ausgebildet als Zugbockausleger (17,17',17''), angekoppelt sind. Durch die Art der Anlenkung werden die Koppelglieder (21,21') im Mähbetrieb überwiegend Zugkräften ausgesetzt, wodurch die Mähaggregate (10,10',10'') in der Vorwärtsfahrt des Trägerfahrzeugs (1) in Fahrtrichtung (F) einem Schleppverhalten ausgesetzt sind.

Der Zugbockausleger (17'') des Frontmähwerks (2) bzw. die Zugbockausleger (17,17') der Seitenmähwerke (3,3') sind Teil des Hauptträgers (12,12') und damit Teil der Tragkonstruktion (56,56') insgesamt, an denen die Mähaggregate (10,10',10'') höhenbeweglich und infolge der Lenkerkopplung (20) auch um eine Rollachse quer zur Fahrtrichtung (F) drehbeweglich angelenkt sind, wobei sich beide Bewegungsformen überlagern können. Desweiteren erlaubt die Lenkerkopplung (20'), bedingt durch die Ausbildung der Lage der Kopplungspunkte der Koppelglieder (21,21'), daß die Mähaggregate (10,10',10') während des Überfahrens eines Hindernisses am Boden, wie beispielsweise eine Bodenerhebung, daß die Mähaggregate (10,10',10'') zusätzlich und relativ zum Trägerfahrzeug (1), gleichzeitig zur höhenbeweglichen Lageveränderung auch entgegengesetzt zur Fahrtrichtung (F) zurückweichen können, was die momentan auftretenden Kraftamplituden der Schleppkraft eines Mähwerks reduziert.

Das Frontmähwerk (2) kann mit dem Hubzylinder (24) in seine endgültige Transportposition angehoben werden

Außerdem können die Mähaggregate (10,10'10,'') während des Mähvorgangs mit den Hubzylindern (19,19',19'') vom Boden abgehoben werden, um beispielsweise bereits gemähtes Grünfutter überfahren zu können, ohne daß die Mähwerkzeuge sich am Boden befinden.

Die beidseitigen Gelenkpunkte eines jeden Koppelgliedes (21,21') sind zweckmäßigerweise als Kugelgelenkaugen ausgebildet. Die Lage der in Fahrtrichtung (F) vorderen Anschlußpunkte der Koppelglieder (21,21') als Bestandteil eines Zugbockauslegers (17,17',17'') ist so festgelegt, daß die Mähaggregate (10,10',10'') während des Übergleitens einer Bodenanhebung oder Bodensenke weitestgehend unabhängig von der momentanen Ausrichtung des Zugbockauslegers (17,17',17'') ist.

Durch diese Art der Ausbildung der Lenkerkopplung (20) können die Mähaggregate (10,10',10'') unabhängig voneinander innerhalb der Beschränkungen ihrer Bewegungsfreiheit eine translatorische Auf- oder Abwärtsbewegung, eine momentane translatorische vor- oder nacheilende Bewegung gegenüber der Fahrbewegung und diesen translatorischen Bewegungen überlagernd momentane Drehbewegungen aller drei Freiheitsgrade ausführen.

Parallel zur Lenkerkopplung (20) stehen die Mähaggregate (10,10',10'') mittels vorgespannter Federelemente (18) mit den ihnen zugeordneten Zugbockauslegern (17,17',17'') derart in Wirkverbindung, daß ein Teilbetrag der Gewichtskraft eines Mähaggregates (10,10',10'') während des Mähbetriebs von dem jeweiligen Zugbockausleger (17,17',17'') getragen wird.

Der restliche Teilbetrag der Gewichtskraft der Mähaggregate (10,10',10'') wird während des Mähbetriebs von den Aufstandsflächen der Mähaggregate (10,10',10'') auf dem Boden abgestützt, so daß diese Stützkräfte die Reaktionskräfte des restlichen Teilbetrags der Gewichtskraft darstellt.

Der vertikale Anteil der Federkräfte als Summenvektor der Federelemente (18), welcher die Entlastungskomponente zur Reduktion der Bodenstützkräfte der Mähaggregate (10,10',10'') darstellt, muß ebenfalls als Reaktionskraft gegenüber dem Boden abgestützt werden.

Die Ankopplung zwischen Frontmähwerk (2) und Trägerfahrzeug (1) ist so gestaltet, daß die vertikale Komponente der Federkräfte, zur Entlastung der Bodenstützkraft des Mähaggregats (10''), auf den Vorderrädern (7) des Trägerfahrzeugs (1) abgestützt wird.

Die Ankopplung zwischen den Seitenmähwerken (3,3') und dem Trägerfahrzeug (1) ist so gestaltet, daß die vertikale Komponente der Federkräfte zur Entlastung der Bodenstützkraft des Mähaggregats (10,10') teils auf die Vorderräder (7), teils auf die Hinterräder (7) des Trägerfahrzeugs (1), und teils auf die Stützräder (15,15') der Seitenmähwerke (3,3') abgestützt wird.

Die Beträge der verbleibenden Bodenstützkräfte zur Abstützung der Mähaggregate (10,10',10'') gegenüber dem Boden können durch die Einstellbarkeit der Federvorspannkräfte eingeteilt werden.

Bestandteil der Lenkerkopplung(20) sind auch die druckmittelbeaufschlagbaren Stellantriebe, beispielsweise ausgebildet als hydraulisch betätigte Hubzylinder (19). In der dargestellten Arbeitsstellung befinden sich die Hubzylinder (19) in Schwimmstellung, so daß diese die Bodenanpassung des Mähaggregats (10,10') nicht behindern.

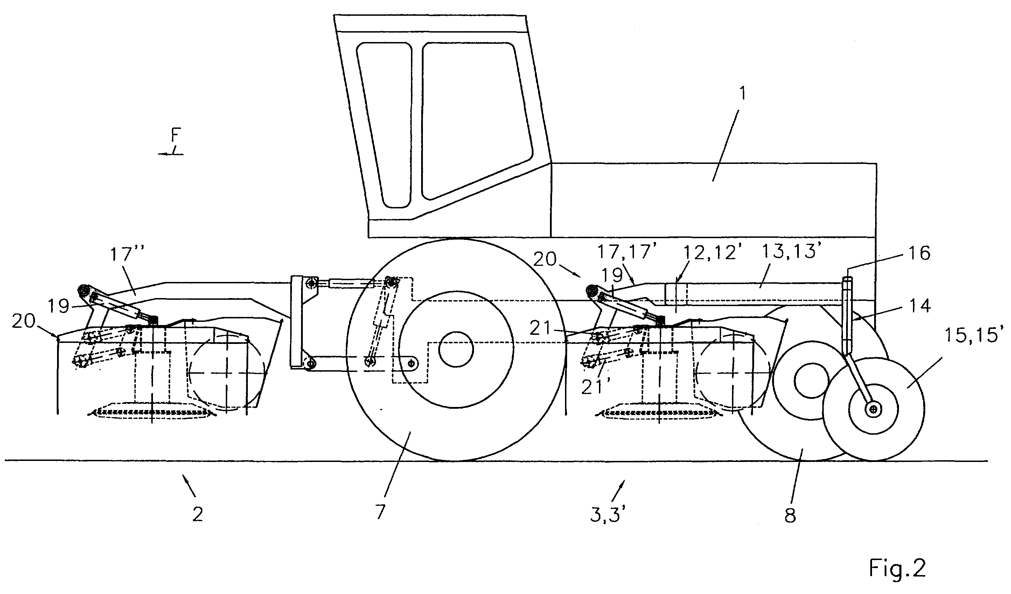

**Fig. 2** zeigt eine selbstfahrende Mäheinheit nach der Erfindung in der Seitenansicht in Fahrtrichtung (F) mit den vom Boden abgehobenen Mähaggregaten (10,10',10''). Die Mähaggregate (10,10',10'') können mit den druckmittelbeaufschlagten Hubzylindern (19,19') aus der Mähstellung in eine angehobene Position überführt und umgekehrt abgesenkt werden. In der angehobenen Stellung können die Mähaggregate (10,10') beispielsweise durch vorgesteuerte entsperrbare Rückschlagventile in der angehobenen Position gehalten werden.

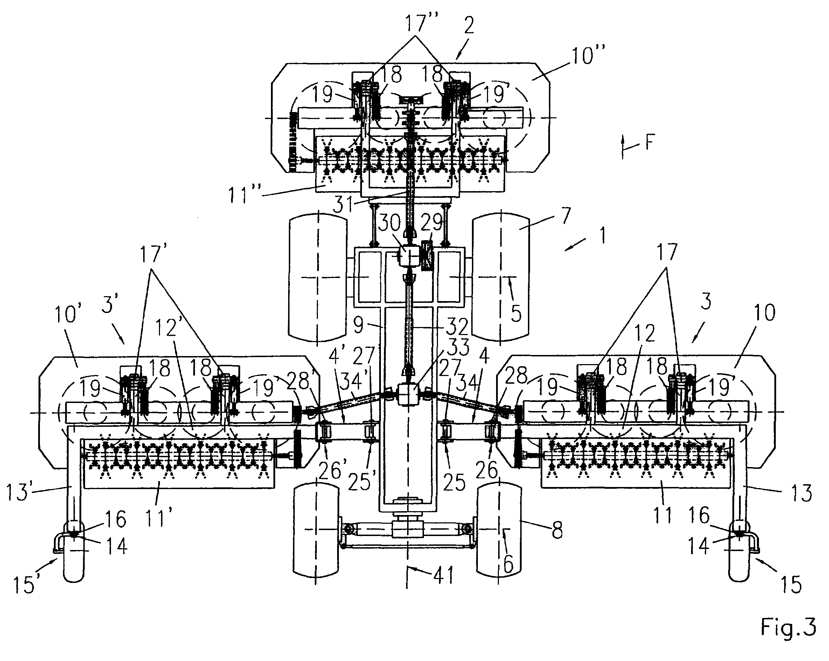

**Fig. 3** zeigt eine selbstfahrende Mäheinheit nach der Erfindung mit einem Trägerfahrzeug (1) in vereinfachter Darstellung in einer Ansicht (X) von oben auf die Arbeitsebene gerichtet gemäß Fig.1. Beide Seitenmähwerke (3,3') sind symmetrisch zur lotrecht zur Fahrbahnebene in Fahrtrichtung (F) verlaufenden Hauptmittelebene (41) angeordnet. Angetrieben werden die Mähwerke, das Frontmähwerk (2) und die Seitenmähwerke (3,3'), von einem, der besseren Übersichtlichkeit der Darstellung wegen nicht dargestellten Verbrennungsmotor, welcher das erforderliche Drehmoment zum Antrieb der Mähaggregate (10,10',10'') beispielsweise über einen Transmissionsantrieb an die Keilriemenscheibe (29) in ein Verteilergetriebe (30), beispielsweise ausgebildet als Kegelradgetriebe, einleitet. An dem Verteilergetriebe (30) befinden sich zwei Abtriebswellen. Diese sind mit den Gelenkwellen (31,32) gekuppelt. Die Gelenkwelle (31) stellt die Fortsetzung des Antriebsstrangs zum Antrieb des Mähaggregats (10'') des Frontmähwerks (2), und die Gelenkwelle (32) stellt die Fortsetzung des Antriebsstrangs zum Antrieb der Mähaggregate (10,10') der Seitenmähwerke (3,3') dar. Das Verteilergetriebe (33), beispielsweise ausgebildet als Kegelradgetriebe, verzweigt den Antriebsstrang zum Antrieb der Mähaggregate (10,10') derart, daß von dem Verteilergetriebe (33) zwei Abtriebswellen mit den an diesen gekuppelten Gelenkwellen (34,34') ausgehen, wobei die Gelenkwelle (34) den Antriebsstrang für das Mähaggregat (3) und die Gelenkwelle (34') den Antriebsstrang für das Mähaggregat (3') darstellt.

Sowohl das Frontmähwerk (2) als auch die Seitenmähwerke (3,3') sind an das Fahrgestell (9) des Trägerfahrzeuges (1) angelenkt.

Das Trägerfahrzeug (1) kann frontseitig, wie dargestellt, mit einer Front-Dreipunkt-Hydraulik ausgestattet sein, an dem das Frontmähwerk (2) angekoppelt ist.

Beide Seitenmähwerke (3,3') sind jeweils mittels eines Auslegerarms (4,4') durch eine Scharniergelenkverbindung (25,25') mit überwiegend fahrtrichtungsparalleler Scharnierachse als Schwenkachse (27,27') für den Auslegerarm (4,4'), an das Fahrgestell (9) des Trägerfahrzeugs (1) angelenkt.

Die Auslegerarme (4,4') stellen das Bindeglied zwischen dem Tragrahmen (9) des Trägerfahrzeugs (1) und dem Hauptträger (12,12') der Seitenmähwerke (3,3') dar.

Diese Verbindung wird hergestellt, indem die Auslegerarme (4,4') endseitig nach außen gerichtet, ebenfalls mittels einer Scharniergelenkverbindung (26,26') mit überwiegend fahrtrichtungsparalleler Scharnierachse als Schwenkachse (28,28') zum Hochklappen des jeweiligen Seitenmähwerks (3,3') in seine jeweilige Transportstellung, mit dem Hauptträger (12,12') verbunden sind.

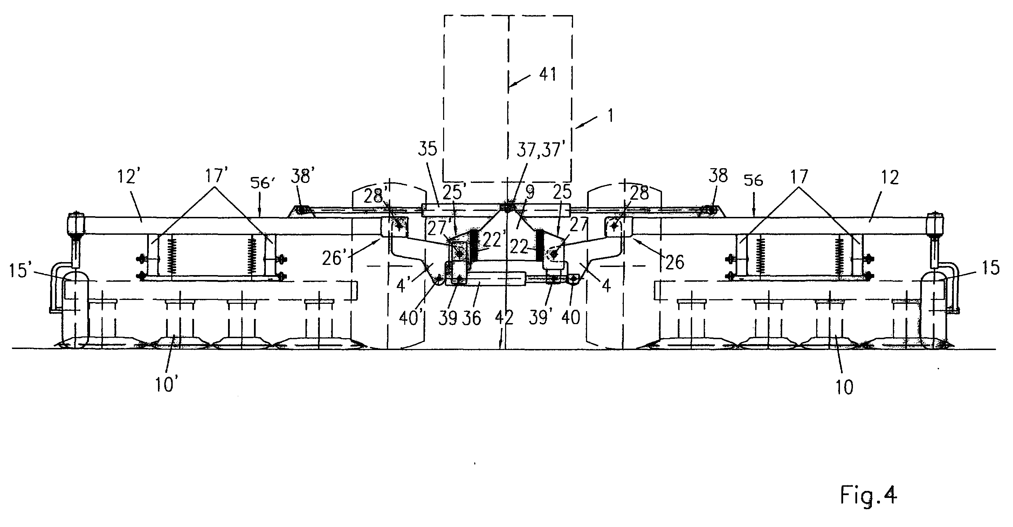

**Fig. 4** zeigt die Ansicht (Y) gemäß Fig.1 in vereinfachter, jedoch vergrößerter Darstellung. Beiden Seitenmähwerken (3,3') sind je zwei druckmittelbeaufschlagte Stellantriebe, ausgebildet als Druckmittelzylinder (35,36) bzw. (35',36'), zugeordnet. Dabei sind die Druckmittelzylinder (35,36) funktional dem Seitenmähwerk (3) und die Druckmittelzylinder (35',36') funktional dem Seitenmähwerk (3') zugeordnet.

Bedingt durch die räumlich eingeschränkten Unterbringungsmöglichkeiten innerhalb des Bauraums des Trägerfahrzeugs sind die funktional zusammenwirkenden Druckmittelzylinder (35,36) einer ersten Vertikalebene zugeordnet und die funktional zusammenwirkenden Druckmittelzylinder (35',36') einer zweiten Vertikalebene zugeordnet, wobei beide Vertikalebenen in Abstand etwa parallel zueinander verlaufen.

Der Übersichtlichkeit halber ist in Fig.4 auf die zeichnerische Darstellung der Druckmittelzylinder (35',36') verzichtet worden, da die Druckmittelzylinder (35',36') in dieser Darstellung weitestgehend von den dargestellten Druckmittelzylindern (35,36) verdeckt sind.

Zylinderseitig sind die Druckmittelzylinder (35,35') in den Gelenkpunkten (37,37') bzw. die Druckmittelzylinder (36,36') in den Gelenkpunkten (39,39') an dem Fahrgestell (9) des Trägerfahrzeugs (1) abgestützt.

Kolbenstangenseitig sind die Druckmittelzylinder (35,35') in den Gelenkpunkten (38,38') an den Hauptträgern (12,12') der Seitenmähwerke (3,3') bzw. die Druckmittelzylinder (36,36') in den Gelenkpunkten (40,40') an den Auslegerarmen (4,4') abgestützt.

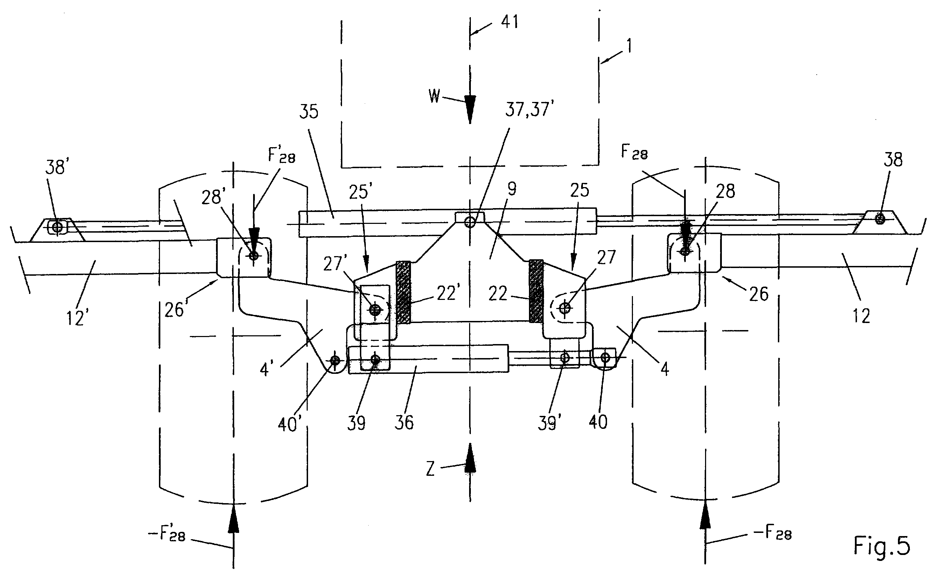

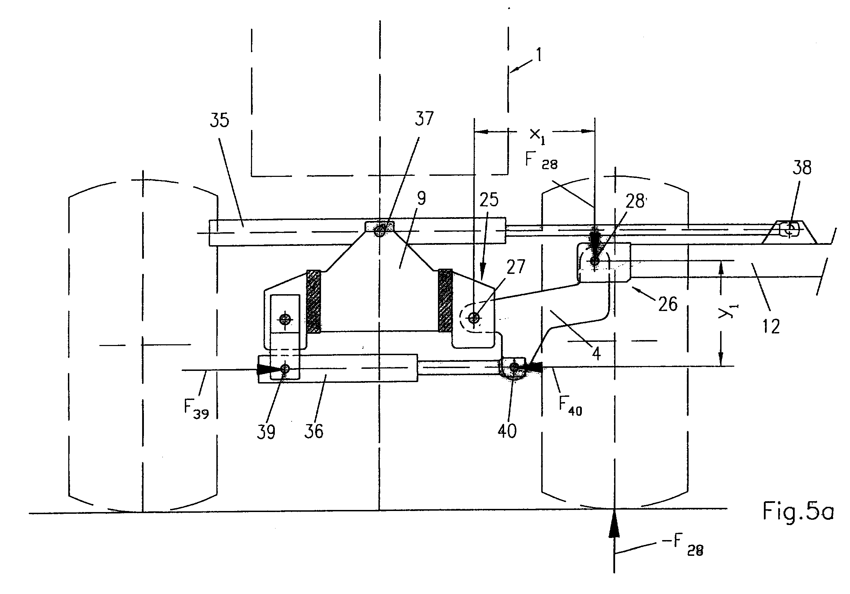

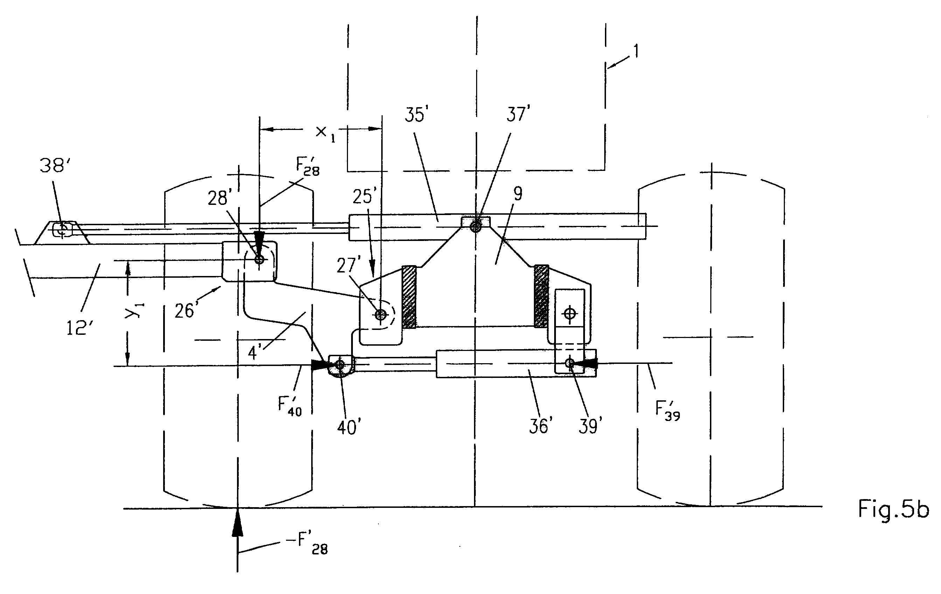

**Fig. 5** zeigt die Anlenkung der Druckmittelzylinder (35,36) gemäß Fig.4 in vergrößerter Darstellung. In den Scharniergelenken (26,26') werden die Hauptträger (12,12') der Tragkonstruktion (55,55') der Mähaggregate (10,10') gegenüber dem Fahrgestell (9) abgestützt. Demzufolge stützen sich in den Gelenken mit den Schwenkachsen (28,28') die Gewichtskräfte ab, die dadurch gleichzeitig auf die Auslegerarme (4,4') einen Drehmoment um die Schwenkachse (27,27') ausüben.

**Fig. 5a** zeigt eine vereinfachte grafische Darstellung der Reaktionskräfte (F₂₈, -F₂₈,F₄₀,F₃₉), hervorgerufen durch die Gewichtskraft (F₂₈) am Beispiel des Auslegerarms (4). Auf die Darstellung der Lagerkräfte in der Scharniergelenkverbindung (25) wurde aus Gründen der Übersichtlichkeit verzichtet. Der Auslegerarm (4), drehbar gelagert um die Schwenkachse (27) in der Scharniergelenkverbindung (26), besitzt gegenüber der Gewichtskraft (F₂₈) um die Schwenkachse (27) den Hebelarm (x₁) und gegenüber der Stützkraft der Kolbenstange des Druckmittelzylinders (36) im Gelenkpunkt (40) den Hebelarm (y₁).

Sofern sich der Auslegerarm (4) im ruhenden Gleichgewicht befindet, muß der Druckmittelzylinder (36,36') in den Gelenkpunkten (39,40) entsprechende Gegenkräfte (F₄₀,F₃₉) aufbringen, wobei (F₃₉) die Reaktionskraft von (F₄₀) darstellt. Diese Gegenkräfte stellen die Zylinderstützkräfte (F₄₀,F₃₉) dar und diese erzeugen in den Druckmittelzylindern (36,36') einen hydrostatischen Druck, der von dem hydraulischen System aufgebracht, d.h. abgestützt werden muß.

**Fig. 5b** zeigt analog zu Fig. 5a die Situation in Folge der Gewichtskraft (F'₂₈) die Reaktionskräfte (F'₂₈,-F'₂₈,F'₄₀,F'₃₉) am Auslegerarm (4'). Auf die Darstellung der Lagerkräfte in der Scharniergelenkverbindung (25') wurde aus Gründen der Übersichtlichkeit verzichtet.

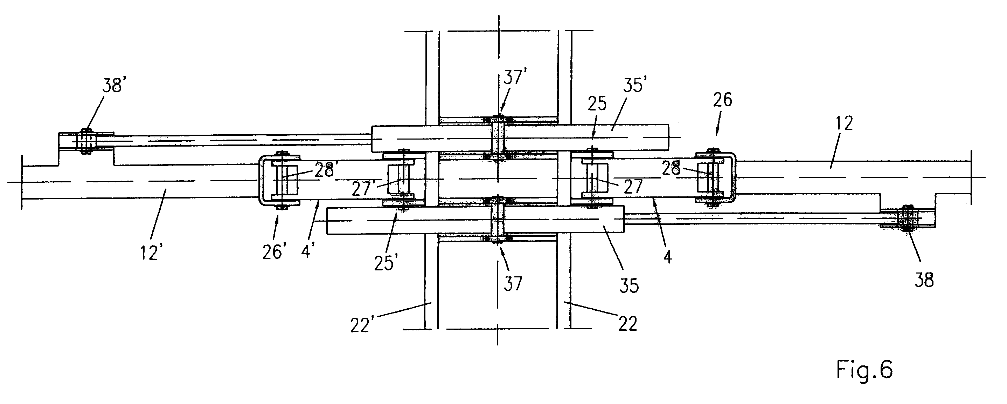

**Fig. 6** zeigt die Ansicht (W) gemäß Fig.5. Sie zeigt die etwa parallel zueinander angeordneten Druckmittelzylinder (35,35').

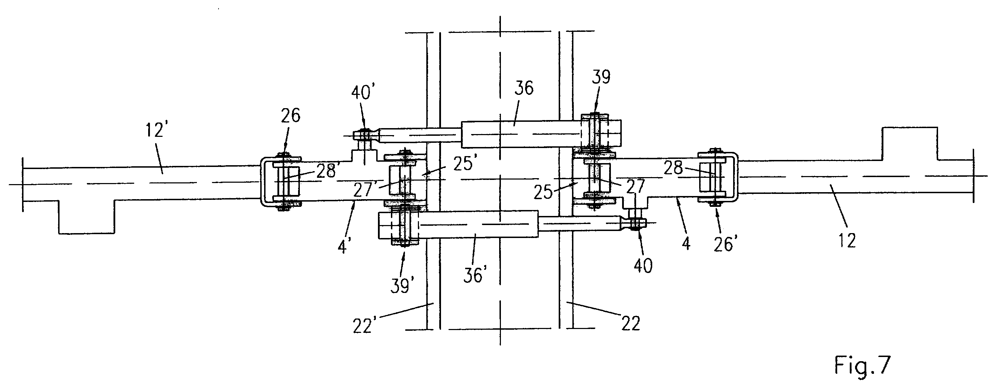

**Fig. 7** zeigt die Ansicht (Z) gemäß Fig.5. Sie zeigt die etwa parallel zueinander angeordneten Druckmittelzylinder (36,36').

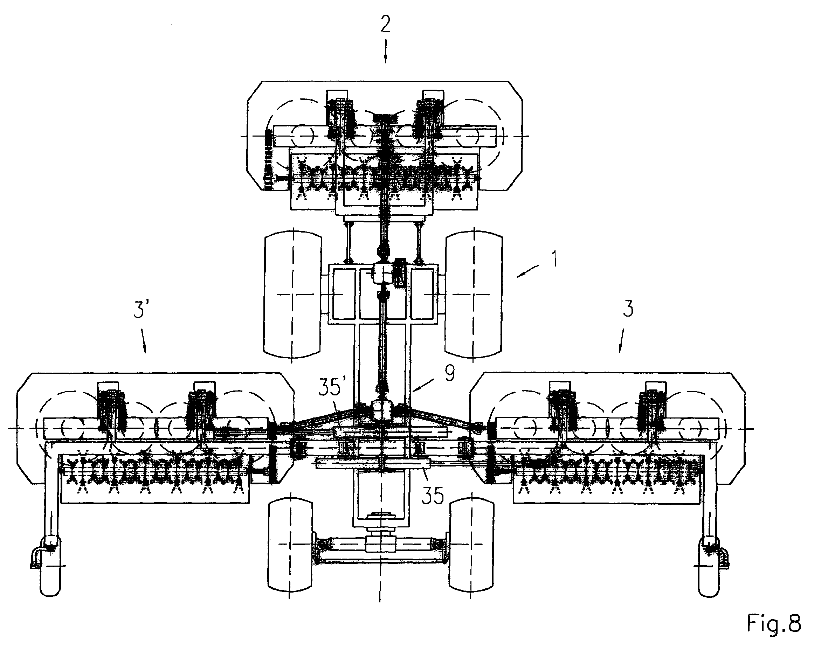

**Fig. 8** zeigt eine selbstfahrende Mäheinheit nach der Erfindung in der Darstellung analog zu Fig.3, wobei in dieser Figur die Lage der Druckmittelzylinder (35,35') zusätzlich dargestellt ist.

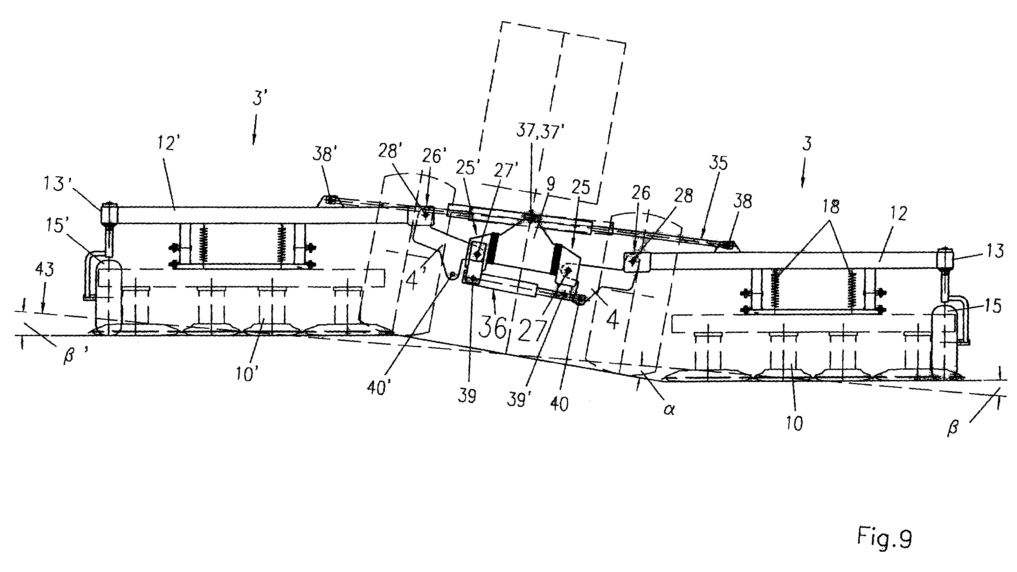

**Fig. 9** zeigt die Darstellung einer selbstfahrenden Mäheinheit nach der Erfindung analog Fig.4 in einem nichtplanebenem Gelände in Arbeitsposition. Die dargestellte Ausrichtung von Trägerfahrzeug (1) und Seitenmähwerke (3,3') ist dem Bodenhorizont des Geländes angepaßt. Dadurch besitzt das Trägerfahrzeug (1) gegenüber der Horizontalen (43) einen Neigungswinkel (α), das Seitenmähwerk (3) einen Neigungswinkel (β), und das Seitenmähwerk (3') einen Neigungswinkel (β').

Für den Fall, daß die Mähwerkskombination in sehr unebenem Gelände oder auch beispielsweise zum Mähen von Böschungen zum Einsatz kommt, kann es von Vorteil sein, daß die Mäheinheit über eine Verstell- und Regelungseinrichtung verfügt, welche die Lage der Schwenkachsen (28,28') der Seitenmähwerke (3,3') und damit den Abstand zum Boden verändern und gegebenenfalls regeln kann.

Dieses kann insbesondere die Unabhängigkeit von den momentanen Roll- und/oder Nickbewegungen des Trägerfahrzeugs (1) längs seines Fahrweges verbessern. Dadurch kann die Beweglichkeit der Mähaggregate (10,10') auch in unebenem Gelände verbessert werden, welches die Kraftspitzen der Schleppkräfte der Mähaggregate (10,10') herabsetzen kann.

Als Stell- und Regeleinrichtung nach der Erfindung können die Druckmittelzylinder (36,36') genutzt werden, indem diese Druckmittelzylinder beispielsweise kolbenboden- und kolbenstangenseitig mit Drucksensoren ausgestattet sind, welche die jeweiligen hydraulischen Drücke sensorisch erfassen und diese Werte als digitalisierte Eingangssignale einem Mikroprozessor zuführen. Desweiteren können die jeweiligen Stellungen der Kolbenstange der Hydraulikzylinder (36,36') über Sensoren als Wegaufnehmer erfaßt werden, wobei die so erfaßten Werte als digitalisierte Eingangssignale einem Mikroprozessor zugeführt werden können. Mit Hilfe dieser Eingangssignale kann der Mikroprozessor im Sinne eines Regelkreises Ausgangssignale erzeugen, die wiederum auf die jeweilige Lage der Kolbenstangen der Hydraulikzylinder (36,36') einwirken können, wodurch die jeweiligen Auslegerarme (4,4') um ihre jeweiligen Schwenkachsen (27,27') verdreht werden können, welches zu einer Veränderung des Abstandes der Schwenkachsen (28,28') gegenüber dem Boden genutzt werden kann.

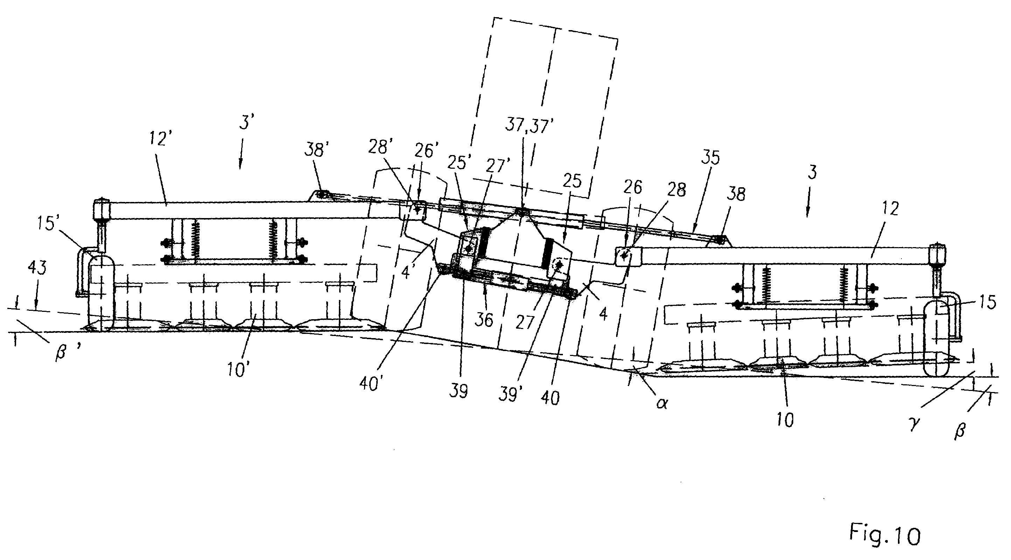

**Fig. 10** zeigt analog zu Fig.9, daß durch die Lenkerkopplung (20) zwischen Mähaggregat (10) und Hauptträger (12) das Mähaggregat (10) eine Drehbewegung relativ zum Hauptträger (12) ausführen kann. Da das Mähaggregat (10) dem Stützrad (15) vorgelagert ist, kann das Mähaggregat (10) den vorgelagerten Bodenhorizontveränderungen, beispielsweise durch Bodenerhebungen oder Bodensenken, einen zusätzlichen Neigungswinkel (γ) erfahren.

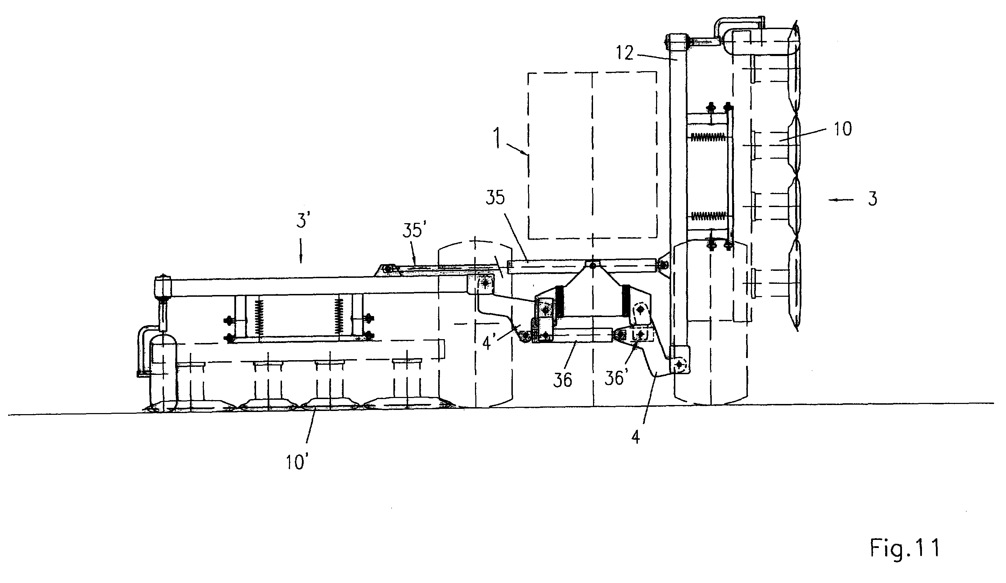

**Fig. 11** zeigt die Ansicht (Y) gemäß Fig.1 in vereinfachter jedoch vergrößerter Darstellung mit einseitig hochgeklapptem Seitenmähwerk (3) in der Transportstellung.

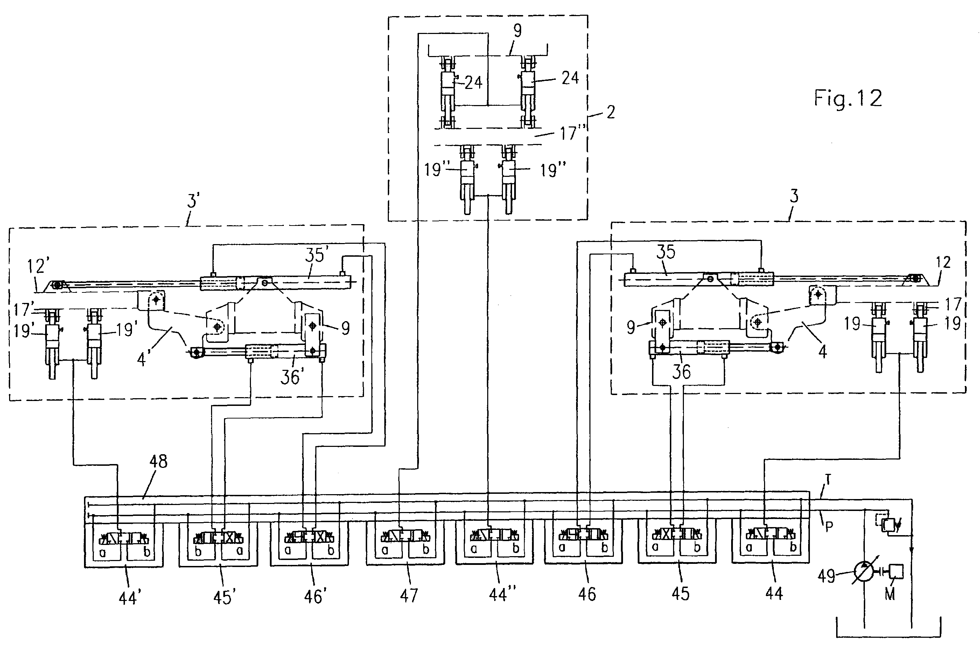

**Fig. 12** zeigt ein Ausführungsbeispiel einer hydraulischen Beschaltung einer selbstfahrenden Mäheinheit nach der Erfindung. Diese Figur zeigt einen vereinfacht dargestellten Hydraulikplan zur Ansteuerung aller hydraulischen Funktionen der Mäheinheit, jedoch ohne Regeleinheit.

Dieses Ausführungsbeispiel zeigt elektrisch betätigte Wegeventile (44,44';45,45';46,46';47) zur Ansteuerung der Hubzylinder (19,19',19'';24) und der übrigen Stellantriebe als Druckmittelzylinder (35,35';36,36').

Alle Wegeventile (44,44';45,45';46,46';47) zur Ansteuerung der hydraulischen Funktionen sind auf einer Reihenflanschplatte (48) angeordnet, die mit der Pumpenleitung (P) und der Tankleitung (T) verbunden ist. Der hydrostatische Druck wird erzeugt von einer Regelpumpe (49), welche von dem Motor (M) des Trägerfahrzeugs (1) angetrieben wird.

Die elektrisch betätigten Wegeventile (44,44';45,45';46,46';47) besitzen eine Mittelstellung als Sperrstellung, sowie jeweils zwei weitere Schaltstellungen (a bzw. b). Angesteuert werden die Ventile beispielsweise mit einem Steuertableau in der Fahrerkabine.

In der Arbeitsstellung sind die Tragholme (12,12') der Seitenmähwerke (3,3') etwa waagerecht ausgerichtet. Die Druckmittelzylinder (36,36') sind hydraulisch eingespannt, d.h. die Wegeventile (45,45') zu deren Ansteuerung sind in Sperrstellung geschaltet.

Die Druckmittelzylinder (35,35') werden von den Wegeventilen (46,46') angesteuert. In der Arbeitsstellung Mähbetrieb sind die Ventile (46,46') in Schwimmstellung, d.h. in der Steuerposition (a) geschaltet.

Die Hubzylinder (19,19',19'';24) werden von den Ventilen (44,44',44'') angesteuert. Die Hubzylinder (19,19',19'';24) befinden sich in der Arbeitsposition Mähbetrieb in Schwimmstellung, d.h., sie sind in der Position (a) geschaltet. Mit den Hubzylindern (19,19',19'';24) können die Mähwerke durch Umschaltung der Wegeventile (44,44',44'') einzeln oder gruppenweise angesteuert werden, wobei in Schaltstellung (b) die Mähaggregate (10,10',10'') vom Boden abgehoben werden. In der Mittelstellung der Ventile (44,44',44'') als Sperrstellung werden die Mähaggregate (10,10',10'') in ihrer angehobenen Position gehalten.

Mit den Hubzylindern (24) wird das Frontmähwerk (2) durch Ansteuerung des Wegeventils (47) in der Schaltposition (b) angehoben. In der Mittelstellung als Sperrstellung des Ventils (47) wird das Frontmähwerk (2) in Transportposition gehalten. In der Schaltstellung (a) kann das Frontmähwerk (2) gegenüber dem Boden abgesenkt werden.

Die Druckmittelzylinder (35,35') zum Anheben der Mähaggregate (10,10') werden von den Wegeventilen (46,46') angesteuert. In der Arbeitsstellung Mähbetrieb sind die Ventile (46,46') in der Schaltstellung (a) in Schwimmstellung geschaltet.

Die Druckmittelzylinder (36,36') werden von den Ventilen (45,45') angesteuert. In der Arbeitsstellung Mähbetrieb sind die Kolbenstangen beider Druckmittelzylinder (45,45') hydraulisch eingespannt, d.h., daß die Wegeventile (45,45') sich in der Mittelstellung als Sperrstellung befinden.

Zum Absenken der Seitenmähwerke (3,3') von der Transportposition in die Arbeitsposition können die Wegeventile (45,46;45',46') gruppenweise gemeinsam angesteuert werden.

Zum Anheben der Seitenmähwerke (3,3') mit den Mähaggregaten (10,10') von der Arbeitsstellung Mähbetrieb in die Transportstellung werden die Wegeventile (45,45') in die Schaltstellung (a) geschaltet und gleichzeitig werden die Ventile (46,46') in die Schaltstellung (b) geschaltet.

Zum Absenken der Seitenmähwerke (3,3') von der Transportposition in die Arbeitsstellung Mähbetrieb werden die Wegeventile (45,45') in die Schaltstellung (a) und die Wegeventile (46,46') ebenfalls in die Schaltstellung (a) geschaltet.

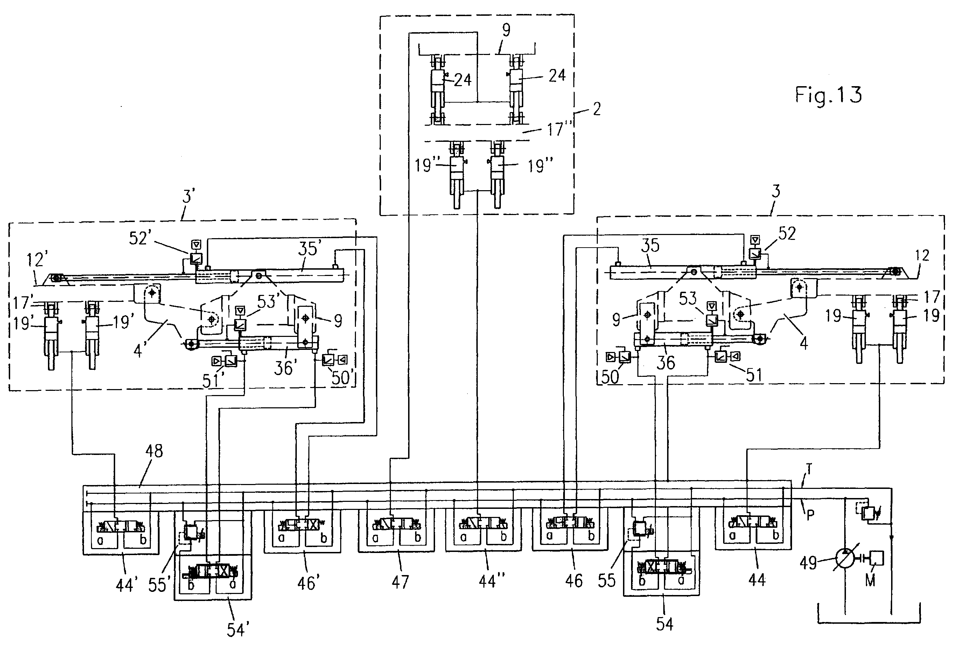

**Fig. 13** zeigt ein weiteres Ausführungsbeispiel einer hydraulischen Beschaltung einer selbstfahrenden Mäheinheit nach der Erfindung. Diese Figur zeigt einen vereinfacht dargestellten Hydraulikplan zur Ansteuerung aller hydraulischen Funktionen der Mäheinheit mit Regeleinheit zur Lageregelung der Auslegerarme (4,4'). Der Steuerungsaufbau entspricht prinzipiell der Beschreibung in Fig. 12.

Die Druckmittelzylinder (36,36') stehen mit den Drucksensoren (50,51); (50',51') zur Erfassung ihres momentanen hydrostatischen Drucks in Verbindung. Die Kolbenstangen der Druckmittelzylinder (35,35'); (36,36') stehen mit den inkrementalen Wegaufnehmern (52,52'); (53,53') zur sensorischen Erfassung ihrer Lage in Bezug zu ihrem Zylinder in Verbindung. Die Ausgangssignale der Drucksensoren (50,51); (50',51') und der Wegaufnehmer (52,52',53,53') stehen einem nicht dargestellten Mikroprozessor als Eingangssignale im regeltechnischen Sinne der Rückführung zur Verfügung. Der hydrostatische Druck auf der Kolbenbodenseite der Druckmittelzylinder (36,36') stellt die Regelgrößen dar, wobei diese Regelgrößen wiederum eine Funktion der Lage der Kolbenstangen darstellen können.

Die Wegeventile (45,45') gemäß Fig. 12 sind ersetzt durch die elektrisch betätigte mikroprozessorgesteuerte Servo-Wegeventile (54,54') mit je einem Servo-Druckventil (55,55').

Damit stellen die Servo-Wegeventile (54,54') mit ihren Servo-Druckventilen (55,55') einschließlich der Druckmittelzylinder (36,36') als Stellantriebe eine mikroprozessorgesteuerte Regelstrecke zur Unterstützung einer dynamisch gesteuerten Anpassung der Mähaggregate (10,10') an das Bodenrelief dar.

In der Arbeitsstellung Mähbetrieb erfassen die Drucksensoren (50,51) die hydrostatischen Drücke auf der Kolbenstangen- und der Kolbenbodenseite, woraus sich der Differenzdruck beider Druckräume ermitteln läßt. Die Wegaufnehmer (53,53') ermitteln die momentane Lage der Kolbenstangen der Druckmittelzylinder (36,36') und die Wegaufnehmer (52,52') ermitteln die momentane Lage der Kolbenstangen der Druckmittelzylinder (35,35'). Diese Werte stehen dem Mikroprozessor als Eingangssignale zur Verfügung, so daß daraus insgesamt der Augenblickszustand der Mähaggregate (10,10'), was deren Ausrichtung gegenüber dem Trägerfahrzeug anbetrifft, dem Mikroprozessor bekannt ist. Die Eingangssignale der Drucksensoren (50,51) liefern Aufschluß über die momentanen Kraftverhältnisse in den Gelenkpunkten (40,40') bzw. in den Schwenkachsen (28,28'), wodurch auf den vertikalen Belastungszustand in den Scharniergelenkverbindungen (26,26') geschlossen werden kann. Durch die Ansteuerung der Servo-Druckventile (55,55') in Verbindung mit den Servo-Wegeventilen (54,54') kann der momentane Gleichgewichtszustand der Auslegerarme (4,4') um die jeweiligen Schwenkachsen (27,27') wieder hergestellt werden.

Durch diese Art der Anlenkung der Mähaggregate (10,10') in Verbindung mit den Auslegern (4,4') und deren Abstützung durch die Druckmittelzylinder (36,36') gegenüber dem Trägerfahrzeug (1) in Verbindung mit der Lenkerkopplung (20) und dem Stützrad (15,15') der Mähaggregate (10,10') können die Bodenstützkräfte der Mähaggregate (10,10') minimiert und den gegebenen Einsatzverhältnissen entsprechend sensibel eingestellt und angepaßt werden.

Dadurch besitzen die Mähaggregate (10,10') während des Mähbetriebs ein gutes dynamisches Verhalten hinsichtlich der Anpassung an den Bodenhorizont, welches gleichermaßen die Schleppkräfte, insbesondere die der Seitenmäher (3,3') minimiert.

Die Übertragung eines Teils der Gewichtskräfte der Mähaggregate (10,10',10'') auf Stützräder (15,15') erhöht die Führungssteife hinsichtlich des Spurverhaltens des Trägerfahrzeugs (1) insgesamt, welches sich besonders günstig auf das Lenkverhalten in Hanglagen auswirkt.

In besonders unebenem Gelände kann diese Art der Anlenkung von Seitenmähwerken an ein Trägerfahrzeug noch unterstützt werden durch eine Lageregelung der Hauptträger (12,12') der Tragkonstruktion (56,56') der Seitenmähwerke (3,3'), wodurch die unerwünschten Giermomente, welche an das Trägerfahrzeug (1) angreifen, minimiert werden. Dieses verbessert insbesondere die Führungssteife des Trägerfahrzeugs (1) in Bezug auf sein Spurverhalten und damit insgesamt die Lenkeigenschaften und die Betriebssicherheit.

## Patentansprüche

1. Selbstfahrende Mäheinheit bestehend aus einem Trägerfahrzeug (1) mit einem Frontmähwerk (2) und beidseitig an dem Trägerfahrzeug (1) angelenkten Seitenmähwerken (3,3'), zum Mähen von landwirtschaftlichem Halmgut mit oder ohne Aufbereiter (11), wobei die Seitenmähwerke (3,3') zwischen den Vorder- (7) und Hinterrädern (8) seitlich auskragend an einem Auslegerarm (4,4') angeordnet und geführt sind, und die Auslegerarme (4,4') jeweils zur höhenbeweglichen Aufhängung der Seitenmähwerke (3,3') an den Tragholmen (22,22') des Fahrgestells (9) des Trägerfahrzeugs (1) um eine annähernd in Fahrt- und Arbeitsrichtung (F) des Trägerfahrzeugs (1) ausgerichtete Achse einer Scharniergelenkverbindung (25,25') schwenkbar gelagert sind, und jedes Mähaggregat (10,10') der Seitenmähwerke (3,3') gelenkig mit dem äußeren Ende des Auslegerarms (4,4') verbunden ist, und jedes Seitenmähwerk (3,3') jeweils mit seinem Auslegerarmen (4,4') mittels einer Kolben-Zylinder-Anordnung an dem Fahrgestell (9) des Trägerfahrzeugs (1) angelenkt und so mit diesem verbunden aus einer etwa horizontalen Arbeitsstellung in eine nahezu vertikale Transportstellung überführbar ist, **dadurch gekennzeichnet**, daß
a) jedes Seitenmähwerk (3,3') einen ersten Stellantrieb als Druckmittelzylinder (35,35') zum Verschwenken eines Mähaggregates (10,10') um die Schwenkachse (27,27') zur Überführung des Seitenmähwerks (3,3') von seiner Arbeits- in seine Transportstellung und umgekehrt aufweist,
b) jedes Seitenmähwerk (3,3') einen zweiten Stellantrieb als Druckmittelzylinder (36,36') zur Überbrückung der Scharniergelenkverbindung (25,25') aufweist derart, daß die Schwenkbeweglichkeit der Auslegerarme (4,4') um die Schwenkachse (27,27') wahlweise freigegeben oder unterbunden werden kann,
c) jedes Seitenmähwerk (3,3') jeweils am äußeren Ende seiner Längserstreckung ein Stützrad (15) aufweist.

2. Selbstfahrende Mäheinheit nach Anspruch 1, **dadurch gekennzeichnet**, daß jedes Seitenmähwerk (3,3') einen Ausleger (4,4') und eine Tragkonstruktion (56,56') zur gelenkigen Ankopplung eines Mähaggregats (10,10') umfaßt, dessen Ausleger (4,4') und Tragkonstruktion (56,56') mittels einer Scharniergelenkverbindung (26,26') miteinander verbunden sind, und die Tragkonstruktion (56,56') bezogen auf die Hauptmittelebene (41) außenseitig ein Stützrad (15,15') aufweist.

3. Selbstfahrende Mäheinheit nach Anspruch 1 und 2, **dadurch gekennzeichnet**, daß die Anlenkung eines Stützrades (15,15') an die Tragkonstruktion (56,56') als Schwenklager (14) mit einer überwiegend vertikal ausgerichteten Hochachse (16) ausgebildet ist.

4. Selbstfahrende Mäheinheit nach Anspruch 1 und 2, **dadurch gekennzeichnet**, daß die gelenkige Ankopplung eines Mähaggregats (10,10') an die Trägerkonstruktion (56,56') aus einer Lenkerkopplung (20) besteht, deren Kopplungsglieder (21,21') in ihren Kopplungspunkten einerseits mit der Tragkonstruktion (56,56') und andererseits mit dem Mähaggregat (10,10') gelenkig verbunden sind.

5. Selbstfahrende Mäheinheit nach Anspruch 1 und 4, **dadurch gekennzeichnet**, daß die Kopplungspunkte der Kopplungsglieder (21 ,21') als Kugelgelenkverbindungen ausgebildet sind.

6. Selbstfahrende Mäheinheit nach Anspruch 1 und 4, **dadurch gekennzeichnet**, daß die Kopplungspunkte zwischen Tragkonstruktion (56,56') und den Kopplungsgliedern (21,21') in der Arbeitsstellung Mähbetrieb bezogen auf die Fahrtrichtung (F) vor den Kopplungspunkten zwischen Tragkonstruktion (56,56') und dem Mähaggregat (10,10') angeordnet sind.

7. Selbstfahrende Mäheinheit nach Anspruch 1 und 4, **dadurch gekennzeichnet**, daß die Kopplungspunkte zwischen Tragkonstruktion (56,56') und den Kopplungsgliedern (21,21') in der Arbeitsstellung Mähbetrieb bezogen auf die Aufstandsebene (42) oberhalb der Kopplungspunkte zwischen Tragkonstruktion (56,56') und dem Mähaggregat (10,10') angeordnet sind.

8. Selbstfahrende Mäheinheit nach Anspruch 1 und 2 in Verbindung mit einem oder mehreren der Ansprüche 3 bis 7, **dadurch gekennzeichnet,** daß die Koppelglieder (21,21') mittels vorgespannter Federelemente (18) überbrückt sind, wodurch ein Teil der Gewichtskraft des Mähaggregats (10,10') zum einen auf das Stützrad (15,15') und zum anderen auf den Auslegerarm (4,4') abgestützt wird.

9. Selbstfahrende Mäheinheit nach Anspruch 1 und 2 in Verbindung mit einem oder mehreren der Ansprüche 2 bis 8, **dadurch gekennzeichnet,** daß die Koppelglieder (21,21') mittels druckbeaufschlagbarer Hubzylinder (19,19') überbrückt sind, wodurch die Mähaggregate (10,10') jeweils aus ihrer Arbeitsstellung vom Boden abgehoben, in einer angehobenen Stellung arretiert und umgekehrt aus der angehobenen Stellung in die Arbeitsstellung Mähbetrieb abgesenkt werden können.

10. Selbstfahrende Mäheinheit nach Anspruch 1, **dadurch gekennzeichnet**, daß die Scharniergelenkverbindungen (25,25') und (26,26') mit ihren Schwenkachsen (27,27') und (28,28') und die Gelenkpunkte (38,38') und (40,40') so zueinander ausgerichtet sind, daß die Druckmittelzylinder (35,36; 35',36') sowohl in der Arbeits- als auch in der Transportstellung der Seitenmähwerke (3,3') in ihrer Längserstreckung überwiegend horizontal in Bezug zur Aufstandsebene (42) ausgerichtet sind.

11. Selbstfahrende Mäheinheit nach Anspruch 1 und 10, **dadurch gekennzeichnet**, daß die Scharniergelenkverbindungen (25,25') und (26,26') mit ihren Schwenkachse (27,27') und (28,28'), die Gelenkpunkte (38,38') und (40,40') so zueinander ausgerichtet sind, daß die Druckmittelzylinder (35,36); (35,36') sowohl in der Arbeits- als auch in der Transportstellung etwa parallel zueinander ausgerichtet sind.

12. Selbstfahrende Mäheinheit nach Anspruch 1, **dadurch gekennzeichnet**, daß die Druckmittelzylinder (36,36') unterhalb der Verbindungslinie zwischen den Schwenkachsen (27,27') und der Aufstandsebene (42) angeordnet sind.

13. Selbstfahrende Mäheinheit nach Anspruch 1, **dadurch gekennzeichnet**, daß die Druckmittelzylinder (35,35') oberhalb der Verbindungslinie zwischen den Schwenkachsen (27,27') und der Aufstandsebene (42) angeordnet sind.

14. Selbstfahrende Mäheinheit nach Anspruch 1, **dadurch gekennzeichnet**, daß die Gelenkpunkte (40,40') und die Gelenkpunkte der Scharniergelenkverbindungen (25,26);(25',26') eines Auslegers (4,4') eine feste Lagebeziehung zueinander einnehmen.

15. Selbstfahrende Mäheinheit nach Anspruch 1, **dadurch gekennzeichnet**, daß der Abstand zwischen Schwenkachse (27) und Gelenkpunkt (40) bzw. zwischen Schwenkachse (27') und Gelenkpunkt (40') kleiner ist als der Abstand zwischen Schwenkachse (27,28) bzw. (27',28').

16. Selbstfahrende Mäheinheit nach Anspruch 1, **dadurch gekennzeichnet**, daß die Stützkraft (F₄₀) bzw. (F'₄₀) auf der kolbenbodenseitig eingespannten Ölsäule des Druckmittelzylinders (36,36') abgestützt ist.

17. Selbstfahrende Mäheinheit nach Anspruch 1 und 16, **dadurch gekennzeichnet**, daß der maximale hydrostatische Druck der kolbenbodenseitig eingespannten Ölsäule durch ein Druckbegrenzungsventil begrenzt ist.

18. Selbstfahrende Mäheinheit nach Anspruch 1 und 16, **dadurch gekennzeichnet**, daß der hydrostatische Druck der kolbenbodenseitig eingespannten Ölsäule steuerbar geregelt ist.

19. Selbstfahrende Mäheinheit nach Anspruch 1 und 16, **dadurch gekennzeichnet**, daß der hydrostatische Druck der kolbenbodenseitig eingespannten Ölsäule steuerbar im Sinne einer Regelstrecke geregelt ist.

20. Selbstfahrende Mäheinheit nach Anspruch 1 und 16, **dadurch gekennzeichnet**, daß der hydrostatische Druck der kolbenbodenseitig eingespannten Ölsäule steuerbar im Sinne einer mikroprozessorgesteuerten Regelstrecke geregelt ist.

21. Selbstfahrende Mäheinheit nach Anspruch 1, **dadurch gekennzeichnet**, daß der Antriebsstrang zum Antrieb der Mähaggregate (10,10',10'') ein erstes Verteilergetriebe (30) im vorderen Bereich des Trägerfahrzeugs (1) und ein zweites Verteilergetriebe (33) im mittleren Bereich des Trägerfahrzeugs (1) derart umfaßt, daß das erste Verteilergetriebe (30) das Eingangsgetriebe zur Einleitung des Antriebsdrehmomentes aller Mähaggregate (10,10',10'') darstellt, und dieses Verteilergetriebe (30) zwei Abtriebswellen beinhaltet, zum einen eine Abtriebswelle zum Antrieb des Mähaggregats (10'') des Frontmähwerks (2) und zum anderen eine Abtriebswelle zum Antrieb des zweiten Verteilergetriebes (33) zum Antrieb der Mähaggregate (10,10') der Seitenmähwerke (3,3').

22. Selbstfahrende Mäheinheit nach Anspruch 1, **dadurch gekennzeichnet**, daß das Verteilergetriebe (30) innerhalb des Bereiches zwischen Frontmähwerk (1) und der Vorderachse (5) des Trägerfahrzeugs (1) angeordnet ist.

23. Selbstfahrende Mäheinheit nach Anspruch 1, **dadurch gekennzeichnet**, daß das Verteilergetriebe (33) in Bezug auf die Fahrtrichtung (F) zwischen der Vorderachse (5) und der Hinterachse (6) des Trägerfahrzeugs (1) angeordnet ist.
